# EUROPEAN PATENT APPLICATION

(11) **EP 4 671 212 A1**
(43) Date of publication of application: **31.12.2025**
(21) Application number: 25185238.0
(22) Date of filing: 25.06.2025
(51) Int. Cl.: C01G 53/05, C01G 53/42, C01G 53/506

(54) **POSITIVE ELECTRODE ACTIVE MATERIAL, SECONDARY BATTERY AND METHOD FOR MANUFACTURING A POSITIVE ELECTRODE ACTIVE MATERIAL**

(30) Priority: 26.06.2024 KR 20240083611
(71) Applicant: ECOPRO BM CO., LTD., Cheongju-si, Chungcheongbuk-do 28117 (KR)
(72) Inventor: Jeon, Jae Woo, 28117 Ochang-eup, Cheongwon-gu, Cheongju-si (KR); Kim, Hee Young, 28117 Ochang-eup, Cheongwon-gu, Cheongju-si (KR); Park, Jeongmin, 28117 Ochang-eup, Cheongwon-gu, Cheongju-si (KR); Yun, Kyoung Sik, 28117 Ochang-eup, Cheongwon-gu, Cheongju-si (KR); Kim, Ju Chul, 28117 Ochang-eup, Cheongwon-gu, Cheongju-si (KR); Shin, Yongwook, 28117 Ochang-eup, Cheongwon-gu, Cheongju-si (KR); Bae, Mingi, 28117 Ochang-eup, Cheongwon-gu, Cheongju-si (KR); Nam, Gwonsik, 28117 Ochang-eup, Cheongwon-gu, Cheongju-si (KR); Park, Hyeon Mock, 28117 Ochang-eup, Cheongwon-gu, Cheongju-si (KR); Kim, TaeYeong, 28117 Ochang-eup, Cheongwon-gu, Cheongju-si (KR); Choi, Yoon Young, 28117 Ochang-eup, Cheongwon-gu, Cheongju-si (KR)
(74) Representative: Gottschald Patentanwälte Partnerschaft mbB

(57) **Abstract**

A positive electrode active material of the present invention is capable of improving capacity and lifetime of a battery simultaneously, a battery of the present invention can have improved capacity and lifetime simultaneously, a method of the present invention is able to manufacture a positive electrode active material capable of improving capacity and lifetime of a battery simultaneously.

## Description

### [Technical Field]

This application claims the priority date of patent application No 10-2024-0083611 filed in the Korean Intellectual Property Office on June 26, 2024, the disclosure of which is incorporated herein in its entirety by reference.

The present invention relates to a positive electrode active material.

The present invention relates to a secondary battery.

The present invention relates to a method for manufacturing a positive electrode active material.

### [Technical Background]

A secondary battery having high capacity and energy density has been developed. Herein, LNCMO(lithium nickel-cobalt-manganese oxide)-based positive electrode active material of a high Ni content may be used. However, when the Ni content of LNCMO increases, a tendency of unstable Ni³⁺ reducing to stable Ni²⁺ may be increased. This may induce a cation mixing phenomenon. The cation mixing phenomenon may be a cause of deterioration in battery life.

To solve this problem, a method of coating various elements on the positive electrode active material may be considered. However, coating of the positive electrode active material may reduce capacity of the battery.

### [Contents of Invention]

### [Technical Problem]

The present invention provides a positive electrode active material capable of improving capacity and lifetime of a battery simultaneously.

The present invention provides a battery having improved capacity and lifetime simultaneously.

The present invention provides a method capable of manufacturing a positive electrode active material capable of improving capacity and lifetime of a battery simultaneously.

### [Technical Solution]

An embodiment of the present invention is a positive electrode active material comprising: a particle comprising a compound represented by the following Chemical Formula 1; and an outer layer surrounding the particle; wherein I003/I104 value of the positive electrode active material is in a range of 0.8 to 1.2, wherein (I102 + I006)/(I101) value of the positive electrode active material is in a range of 0.448 to 0.467, and wherein a c-axis length of the positive electrode active material is in a range of 14.1870 Å to 14.1893 Å:

[Chemical Formula 1] Liₐ(NiₓMn_{y}Co_{z}M1_{w})O₂

in Chemical Formula 1, 0.9 ≤ a ≤ 1.1, 0.8≤x1.0, 0 ≤ y ≤ 0.5, 0≤z≤0.5, 0<w<0.005, and x+y+z+w=1, and M1 comprises at least one selected from the group consisting of Al, Ti, Zr, Mg, Zn, B, Mo, Fe, Co, Ni, Ba, and W.

The outer layer may comprise: an M2 component distributed on a portion of a surface of the particle; and an M3 component different from the M2 component and distributed on a remaining portion of the surface of the particle; wherein the M2 component comprises at least three selected from the group consisting of Al, Ti, Zr, Mg, Zn, B, Mo, Fe, Co, Ni, Ba, and W, and wherein the M3 component comprises at least one selected from the group consisting of Al, Ti, Zr, Mg, Zn, B, Mo, Fe, Co, Ni, Ba, and W.

The M2 component content may be greater than the M3 component content.

The M2 component content may be in a range of 0.9 mol% to 1.8 mol%.

The M3 component content may be in a range of 0.25 mol% to 0.35 mol%.

The M1 component may comprise Zr.

The M2 component may comprise Zr, Al, and Ti.

The M3 component may comprise B.

Another embodiment of the present invention is a secondary battery comprising: a positive electrode, a negative electrode, and an electrolyte, wherein the positive electrode comprises a positive electrode active material, and wherein the positive electrode active material comprises: a particle comprising a compound represented by the following Chemical Formula 1; and an outer layer surrounding the particle; wherein I003/I104 value of the positive electrode active material is in a range of 0.8 to 1.2, wherein (I102 + I006)/(I101) value of the positive electrode active material is in a range of 0.448 to 0.467, and wherein a c-axis length of the positive electrode active material is in a range of 14.1870 Å to 14.1893 Å:

[Chemical Formula 1] Liₐ(NiₓMn_{y}Co_{z}M1_{w})O₂

in Chemical Formula 1, 0.9 ≤a ≤1.1, 0.8≤x1.0, 0 ≤y ≤0.5, 0≤z≤0.5, 0<w<0.005, and x+y+z+w=1, and M1 comprises at least one selected from the group consisting of Al, Ti, Zr, Mg, Zn, B, Mo, Fe, Co, Ni, Ba, and W.

Another embodiment of the present invention is a method for manufacturing a positive electrode active material, the method comprising: preparing a hydroxide of a transition metal comprising nickel, cobalt, and manganese; sintering a first mixture comprising the transition metal hydroxide, a M1 component precursor, and a lithium compound to obtain a first lithium composite oxide; sintering a second mixture comprising the first lithium composite oxide and a M2 component precursor to obtain a second lithium composite oxide; water-cleaning the second lithium composite oxide; drying the water-cleaned second lithium composite oxide; and heat-treating a third mixture comprising the dried second lithium composite oxide and a M3 component precursor; wherein the M1 component comprises at least one selected from the group consisting of Al, Ti, Zr, Mg, Zn, B, Mo, Fe, Co, Ni, Ba, and W, wherein the M2 component comprises at least three selected from the group consisting of Al, Ti, Zr, Mg, Zn, B, Mo, Fe, Co, Ni, Ba, and W, wherein the M3 component comprises at least one selected from the group consisting of Al, Ti, Zr, Mg, Zn, B, Mo, Fe, Co, Ni, Ba, and W, wherein the M3 component is different from the M2 component, wherein the M3 component precursor content of the third mixture is in a range of 0.25 mol to 0.35 mol with respect to 100 mol of the dried second lithium composite oxide, and wherein the heat-treating of the third mixture is performed at a temperature in a range of 250 °C to 400 °C.

The M1 component precursor content of the first mixture may be less than 0.5 mol with respect to 100 mol of the transition metal hydroxide.

The M2 component precursor content of the second mixture may be in a range of 0.9 mol to 1.8 mol with respect to 100 mol of the first lithium composite oxide.

The M1 component may comprise Zr, the M2 component may comprise Zr, Al, and Ti, and the M3 component may compris B.

### [Technical Effect]

A positive electrode active material of the present invention is capable of improving capacity and lifetime of a battery simultaneously.

A battery of the present invention has improved capacity and lifetime simultaneously.

A method of the present invention is able to manufacture a positive electrode active material capable of improving capacity and lifetime of a battery simultaneously.

### [Brief Description of Drawings]

FIG 1 shows XRD analysis results of Example 2, Example 5, and Example 6, and Comparative Example 1 and Comparative Example 4.
FIG 2 shows XRD analysis results of Example 1 to Example 4, and Comparative Example 2 to Comparative Example 3.

### [Detailed Description]

The present invention is described in detail below. However, this description is only an example. The scope of the present invention is not limited to the exemplary embodiments described herein.

An embodiment of the present invention is a positive electrode active material.

The positive electrode active material may exhibit several characteristics in X-ray diffraction (XRD) analysis using CuKα ray. Such a positive electrode active material may improve capacity and lifespan characteristics of a battery comprising a positive electrode including the same.

I003/I104 value of the positive electrode active material may be in the range of 0.8 to 1.2, (I102 + I006)/(I101) value of the positive electrode active material may be in the range of 0.448 to 0.467, and c-axis length of the positive electrode active material may be in the range of 14.1870 Å to 14.1893 Å. Although described below, other characteristics of the positive electrode active material may further also be adjusted.

In the present invention, if a certain value is in the range of A to B, the value may be greater than or equal to A and less than or equal to B.

In the present invention, certain values may be rounded.

The Iabc may mean an integral intensity of a diffraction peak of an (abc) plane in XRD analysis. The method of measuring it will be described in more detail in the Example section below.

The I003/I104 value may mean the occupancy of Ni of the positive electrode active material. The occupancy of Ni may be one of the indicators of cation mixing. As the value of I003/I104 increases, the degree of cation mixing may decrease.

The I003/I104 value of the positive electrode active material may be in a range of 0.8 to 1.2. If the value is less than 0.8, a lot of cation mixing may occur. As a result, the lifetime characteristics of the battery, particularly the high-temperature lifetime characteristics, may be degraded. If the value exceeds 1.2, too much doping may occur on the positive electrode active material. As a result, the capacity of the battery can be lowered.

The (I102 + I006)/(I101) value is also known as an R-Factor or a hexagonal order.

The increase or decrease in the R-Factor of the positive electrode active material may affect the hexagonal order, the grain size, and the layered structure of the positive electrode active material. Therefore, the R-Factor may be appropriately adjusted.

The (I102 + I006)/(I101) value of the positive electrode active material may be in a range of 0.448 to 0.467. That is, in the present invention, the R-Factor of the positive electrode active material may be very finely controlled. When the R-Factor is less than 0.448, the grain size of the positive electrode active material may increase. As a result, both the capacity and lifetime of the battery may be reduced. When the R-Factor exceeds 0.467, the layered structure of the positive electrode active material may become unstable. As a result, the capacity of the battery can be reduced.

The c-axis length of the positive electrode active material may be related to a charging/discharging speed of a battery and stability of the active material.

The c-axis length of the positive electrode active material may mean a c-axis direction length of a crystal which the positive electrode active material comprises. The c-axis length of the positive electrode active material may be confirmed by XRD analysis of the positive electrode active material. The method for measuring the c-axis length of the positive electrode active material will be described in more detail in the Example section below.

The c-axis length may be in a range of 14.1870 Å to 14.1893 Å. That is, the c-axis length of the positive electrode active material may be very finely adjusted. When the c-axis length is less than 14.1870 Å, the charge/discharge speed of the battery may decrease. When the c-axis length is greater than 14.1893 Å, the stability of the active material may decrease.

The satisfaction of all of the above-described characteristics of the positive electrode active material may mean that an amorphous material is coated on the positive electrode active material under appropriate conditions. In addition, this may mean that the performance of the positive electrode active material may be improved even if the crystal structure of the positive electrode active material is not significantly changed. As a result, the positive electrode active material satisfying all of the above characteristics may simultaneously improve the capacity and lifetime characteristics of the secondary battery.

The positive electrode active material may further satisfy additional characteristics.

Preferably, the positive electrode active material may comprise a specific element in an amount in a specific range. Specifically, the B content of the positive electrode active material may be in a range of 0.135 wt % to 0.335 wt %.

More preferably, the B content of the positive electrode active material may be in a range of two values of 0.135 wt %, 0.150 wt %, 0.200 wt %, 0.250 wt %, 0.300 wt % and 0.335 wt %.

The B content may be measured based on the entire positive electrode active material. For example, the B content may be measured by an ICP analysis method.

The above characteristics of the positive electrode active material may be controlled according to the structure and chemical composition of the positive electrode active material.

Preferably, the positive electrode active material may comprise a particle and an outer layer surrounding the particle.

The particle may include LNMCO. Preferably, the composition of the LNMCO may be adjusted. More preferably, the particle may comprise a compound represented by the following Chemical Formula 1:

[Chemical Formula 1] Liₐ(NiₓMn_{y}Co_{z}M1_{w})O₂

In Chemical Formula 1, 0.9 ≤ a ≤ 1.1, 0.8≤x1.0, 0 ≤ y ≤ 0.5, 0≤z≤0.5, 0<w<0.005, and x+y+z+w=1.

In Chemical Formula 1, M1 may comprise at least one selected from the group consisting of Al, Ti, Zr, Mg, Zn, B, Mo, Fe, Co, Ni, Ba, and W.

The a may mean occupancy of Li and Ni of the particle. The a may be 1.0≤a≤1.1, or 1.0<a<1.05.

The x may mean Ni content of the particle. The Ni content of the particle may affect the capacity of the battery.

The y may mean Mn content of the particle. The Mn content of the particle may affect the safety of the battery.

The z may mean Co content of the particle. The Co content of the particle may affect controlling the corrosion of the electrode and the risk of explosion of the battery.

When the content of Ni, Mn, and Co in the LNMCO is appropriately adjusted, the capacity and lifetime characteristics of the battery may be improved.

The M1 may mean an element doped in the LMNCO. Preferably, the M1 may comprise Zr. Zr may be disposed at a Li site when doped in LNMCO and may not participate in a battery reaction. Zr may stabilize the lattice structure of the material when the battery is charged.

The w may mean the content of the doped element. Since the w value exceeds 0, the LNMCO may be doped with the M1. When the w value is 0.5 or less, the capacity of the battery may be maintained.

Preferably, the w value may be in a range of two values of 0.1, 0.2, 0.3, 0.4, and 0.5.

The sum of x, y, z, and w is 1.

Preferably, the outer layer may comprise components exhibiting different compositions on the surface of the particle. More preferably, the outer layer may comprise a M2 component and a M3 component. Even more preferably, the outer layer may comprise a M2 component and a M3 component, wherein the M2 component and the M3 component may be different from each other.

Preferably, the M2 component may comprise three or more components. Preferably, the M3 component may comprise one or more components.

Herein, the M2 component may be distributed in one portion of the surface of the particle, and the M3 component may be distributed in the remaining portion of the surface of the particle. As a result, most of the surface of the particle may be surrounded by the M2 component and the M3 component.

Preferably, the M2 component may comprise three or more species selected from the group consisting of Al, Ti, Zr, Mg, Zn, B, Mo, Fe, Co, Ni, Ba, and W. The species and content ratio of the three or more elements may be determined by considering the number of oxidations of each element, the crystal structure of the positive electrode active material, and the effect of the positive electrode active material on the battery performance, or the like.

More preferably, the M2 component may include Zr, Al, and Ti.

When the outer layer of the positive electrode active material comprises Zr, heat generated in the positive electrode may be easily released to the outside due to good thermal conductivity of Zr. As a result, the battery including the positive electrode active material may exhibit good lifetime characteristics.

When the outer layer of the positive electrode active material comprises Al, the stability of the positive electrode may be improved.

When the outer layer of the positive electrode active material comprises Ti, physical contact between the positive electrode active material and the electrolyte may be prevented. In addition, transition metals such as nickel, manganese, and cobalt may be prevented from being eluted from the positive electrode active material.

Preferably, the M3 component may comprise one or more types selected from the group consisting of Al, Ti, Zr, Mg, Zn, B, Mo, Fe, Co, Ni, Ba, and W. The M3 component may include an element different from the M2 component.

More preferably, the M3 component may include B. When the outer layer of the positive electrode active material comprises B, the output characteristics and cycle characteristics of the battery may be improved.

Preferably, the M2 component content may be greater than the M3 component content. The M2 component content and the M3 component content may mean the content in the positive electrode active material.

Preferably, the M2 component content may be in a range of 0.3 mol % to 0.6 mol % per species. The M2 component may include three or more elements. Therefore, the M2 component content may be in a range of 0.9 mol % to 1.8 mol %.

More preferably, the M2 component content may be in a range of two values of 0.3 mol %, 0.4 mol %, 0.5 mol %, and 0.6 mol % per species. In addition, the M2 component content may be in a range of two values of 0.9 mol%, 1.0 mol%, 1.1 mol%, 1.2 mol%, 1.3 mol%, 1.4 mol%, 1.5 mol%, 1.6 mol%, 1.7 mol%, and 1.8 mol%.

Preferably, the M3 component content may be in a range of 0.25 mol% to 0.35 mol%.

Another specific embodiment of the present invention is a secondary battery.

The secondary battery may comprise a positive electrode, a negative electrode, and an electrolyte. Herein, the electrolyte may comprise a separator and an electrolyte liquid. The separator may be disposed between the positive electrode and the negative electrode. The positive electrode may be an electrode that performs a reduction reaction during discharge. The negative electrode may be an electrode that performs an oxidation reaction during discharge.

The electrode of the battery may include an electrode current collector and an electrode active material attached to the electrode current collector.

Among the electrode active materials, the positive electrode active material may comprise a lithium intercalation material. The positive electrode active material may be a positive electrode active material of the present invention.

Among the electrode active materials, the negative electrode active material may comprise a lithium intercalation material. Preferably, the lithium intercalation material may comprise one or more selected from the group consisting of lithium-based metals comprising lithium metals and lithium alloys; and carbon-based compounds comprising carbon, petroleum coke, activated carbon, and graphite.

Preferably, the positive electrode current collector may be a foil of metal comprising one or more selected from the group consisting of aluminum and nickel.

Preferably, the negative electrode current collector may a foil of metal comprising one or more selected from the group consisting of copper, gold, and nickel.

Preferably, the electrolyte liquid may comprise an organic solvent and an ionic salt. The ionic salt may be dissolved or dissociated in the organic solvent.

More preferably, the organic solvent may comprise one or more selected from the group consisting of propylene carbonate (PC), ethylene carbonate (EC), diethyl carbonate (DEC), dimethyl carbonate (DMC), dipropyl carbonate (DPC), dimethylsulfoxide, acetonitrile, dimethoxyethane, diethoxyethane, tetrahydrofuran, N-methyl-2-pyrrolidone (NMP), ethyl methyl carbonate (EMC), and gamma butyrolactone (γ-butyrolactone).

More preferably, the ionic salt may have a structure of A⁺B⁻. In the structure, A⁺ may comprise an alkali metal cation such as Li⁺, Na^{+,} and K⁺. In the structure, B⁻ may comprise an anion such as PF₆⁻, BF₄⁻, Cl⁻, Br⁻, I⁻, ClO₄^{-,} AsF₆⁻, CH₃CO₂⁻, CF₃SO₃⁻, N(CF₃SO₂)₂⁻, and C(CF₂SO₂)₃⁻

Another specific embodiment of the present invention is a method of manufacturing a positive electrode active material.

The manufacturing method of the present invention may produce a positive electrode active material having the above-described characteristics.

The manufacturing method of present invention may comprise at least preparing a hydroxide of a transition metal comprising nickel, cobalt, and manganese; sintering a first mixture comprising the transition metal hydroxide, a M1 component precursor, and a lithium compound to obtain a first lithium composite oxide; sintering a second mixture comprising the first lithium composite oxide and a M2 component precursor to obtain a second lithium composite oxide; water-cleaning the second lithium composite oxide; drying the water-cleaned second lithium composite oxide; and heat-treating a third mixture comprising the dried second lithium composite oxide and a M3 component precursor.

The manufacturing method may comprise preparing a hydroxide of a transition metal. The hydroxide of the transition metal may comprise nickel, cobalt, and manganese. That is, the transition metal of the transition metal hydroxide may comprise nickel, cobalt, and manganese.

Subsequently, the manufacturing method may comprise sintering a first mixture comprising the transition metal hydroxide, a M1 component precursor, and a lithium compound. The first mixture may be sintered to form lithium transition metal oxide. The first mixture may further include the M1 component precursor to dope the lithium transition metal oxide with the M1 component. When the first mixture is sintered, a first lithium composite oxide in which the M1 component is doped to the lithium transition metal oxide may be produced.

In the present invention, the M# component precursor may refer to all compounds that allow the M# component to be detected in the result after a predetermined treatment. Herein, # may be 1, 2, or 3.

The M# component may be the same as that mentioned in the description of the positive electrode active material.

The sintering of the first mixture may be performed under an oxygen atmosphere. As a result, an oxide may be produced.

Then, the manufacturing method may comprise sintering the second mixture comprising the first lithium composite oxide and the M2 component precursor. When the second mixture is sintered, a second lithium composite oxide may be produced. The second lithium composite oxide may include the first lithium composite oxide and the M2 component formed on at least a portion of a surface of the first lithium composite oxide.

In the manufacturing method, the second lithium composite oxide may be water-cleaned and dried. Preferably, the manufacturing method may comprise water-cleaning the second lithium composite oxide; and drying the water-cleaned second lithium composite oxide.

The manufacturing method may further heat-treat the washed and dried second lithium composite oxide. Specifically, the manufacturing method may comprise heat-treating the third mixture comprising the dried second lithium composite oxide and the M3 component precursor. As a result, a positive electrode active material satisfying the characteristics (the aforementioned I003/I104 value, (I102 + I006)/(I101) value, c-axis length, and the like) may be produced.

In particular, the manufacturing method may more precisely perform the step of heat-treating the third mixture to manufacture a positive electrode active material satisfying the aforementioned characteristics. In heat-treating the third mixture, the M3 component precursor content of the third mixture and the temperature of the heat-treatment may be controlled.

Specifically, the M3 component precursor content of the third mixture may be in a range of 0.25 mol to 0.35 mol with respect to 100 mol of the dried second lithium composite oxide. In addition, the heat-treating the third mixture may be performed at a temperature in a range of 250 °C to 400 °C.

Preferably, the M3 component precursor content of the third mixture may be in a range of two values of 0.25 mol, 0.26 mol, 0.27 mol, 0.28 mol, 0.29 mol, 0.30 mol, 0.31 mol, 0.32 mol, 0.33 mol, 0.34 mol, and 0.35 mol with respect to 100 mol of the dried second lithium composite oxide.

Preferably, the heat-treating temperature of the third mixture may be in a range of two values of 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, and 400 °C.

In the manufacturing method, the composition and the process conditions of each step may be controlled more precisely.

Preferably, the M1 component precursor content of the first mixture may be less than 0.5 mol with respect to 100 mol of the transition metal hydroxide. As described above, the M1 component may mean an element doped in the LMNCO, and a doping amount thereof may be less than 0.5 mol with respect to 100 mol of the transition metal hydroxide.

More preferably, the M1 component precursor content of the first mixture may be in a range of two values of 0.1 mol, 0.2 mol, 0.3 mol, 0.4 mol, and 0.5 mol with respect to 100 mol of the transition metal hydroxide.

Preferably, the sintering of the first mixture may be performed under an oxygen atmosphere. As a result, an oxide may be produced.

More preferably, the sintering of the first mixture may be performed at a temperature in a range of 600 °C to 700 °C.

More preferably, the sintering temperature of the first mixture may be in a range of two values of 600 °C, 610 °C, 620 °C, 630 °C, 640 °C, 650 °C, 660 °C, 670 °C, 680 °C, 690 °C, and 700 °C.

Preferably, the sintering of the first mixture may be performed for a time in a range of 10 hours to 14 hours.

More preferably, the sintering time of the first mixture may be in a range of two values of 10 hours, 11 hours, 12 hours, 13 hours, and 14 hours.

Preferably, the M2 component precursor content of the second mixture may be in a range of 0.9 mol to 1.8 mol with respect to 100 mol of the first lithium composite oxide. As described above, the M2 component includes three or more elements. Therefore, the content of each element constituting the M2 of the second mixture may be in a range of 0.3 mol to 0.6 mol with respect to 100 mol of the first lithium composite oxide.

More preferably, the content of each element constituting the M2 of the second mixture may be in a range of two values of 0.3 mol, 0.4 mol, 0.5 mol, and 0.6 mol.

Preferably, the M2 component precursor content of the second mixture may be in a range of two values of 0.9 mol, 1.0 mol, 1.1 mol, 1.2 mol, 1.3 mol, 1.4 mol, 1.5 mol, 1.6 mol, 1.7 mol, and 1.8 mol with respect to 100 mol of the first lithium composite oxide.

Preferably, the sintering of the second mixture may be performed under an oxygen atmosphere. As a result, an oxide may be produced.

Preferably, the temperature at which the sintering of the second mixture is performed may be higher than the temperature at which the sintering of the first mixture is performed.

More preferably, the sintering of the second mixture may be performed at a temperature in a range of 650 °C to 750 °C.

More preferably, the sintering temperature of the second mixture may be in a range of two values of 650 °C, 660 °C, 670 °C, 680 °C, 690 °C, 700 °C, 710 °C, 720 °C, 730 °C, 740 °C, and 750 °C.

Preferably, the sintering of the second mixture may be performed for a time in a range of 10 hours to 14 hours.

More preferably, the sintering time of the second mixture may be in a range of two values of 10 hours, 11 hours, 12 hours, 13 hours, and 14 hours.

Preferably, the water-cleaning of the second lithium composite oxide may be performed with the water at a temperature in a range of 20 °C to 30 °C.

More preferably, the water temperature at the water-cleaning may be in a range of two values of 21 °C, 22 °C, 23 °C, 24 °C, 25 °C, 26 °C, 27 °C, 28 °C, 29 °C, and 30 °C.

More preferably, the water-cleaning of the second lithium composite oxide may be performed for a time of 30 minutes or more.

Preferably, the drying of the water-cleaned second lithium composite oxide may be formed at a temperature in a range of 250 °C to 400 °C. The drying may be performed in a dryer separately from the sintering.

More preferably, the drying temperature of the water-cleaned second lithium composite oxide may be in a range of two values of 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, and 400 °C.

Preferably, the heat-treating the third mixture may be performed under an oxygen atmosphere. As a result, an oxide may be produced.

Preferably, the heat-treating the third mixture may be performed for a time of 8 hours or more. More preferably, the heat-treating time of the third mixture may be in a range of 8 hours to 15 hours. Even more preferably, the heat-treating time of the third mixture may be in a range of two values among 8 hours, 9 hours, 10 hours, 11 hours, 12 hours, 13 hours, 14 hours, and 15 hours.

Preferably, the M1 component may comprise Zr. In addition, the precursor of the M1 component may comprise ZrO₂.

Preferably, the M2 component may comprise Zr, Al, and Ti. In addition, the precursor of the M2 component may comprise ZrO₂, Al₂O₃, and TiO₂.

Preferably, the M3 component may comprise B. In addition, the precursor of the M3 component may include H₃BO₃.

Hereinafter, embodiments of the present invention will be described with reference to specific experimental examples. The Examples and Comparative Examples included in the experimental examples are merely illustrative of the present invention, and do not limit the appended claims. It is apparent to those skilled in the art that the present invention may be variously modified and changed within the scope and spirit of the present invention. In addition, it is natural that such changes and modifications belong to the appended claims.

### [Preparation Example]

### Example 1. Positive Electrode Active Material

A positive electrode active material was prepared in the following order.
(1) A hydroxide of a transition metal comprising 90.4 mol %, 8.4 mol %, and 1.2 mol % of nickel, cobalt, and manganese, respectively, is prepared.
(2) A first mixture comprising the transition metal hydroxide, ZrO₂, and a lithium compound (LiOH) is obtained. The ZrO₂ content of the first mixture is 0.3 mol relative to 100 mol of the transition metal hydroxide. The lithium compound content of the first mixture is 105 mol relative to 100 mol of the transition metal hydroxide (Li/M = 1.05).
(3) The first mixture is sintered under an oxygen atmosphere at a temperature of 675 °C for 12 hours. A first lithium composite oxide is obtained.
(4) A second mixture comprising the first lithium composite oxide, 0.1 mol of ZrO₂, 0.6 mol of Al₂O₃, and 0.6 mol of TiO₂ relative to 100 mol of the first lithium composite oxide is obtained.
(5) The second mixture is sintered under an oxygen atmosphere at a temperature of 685 °C for 12 hours. A second lithium composite oxide is obtained.
(6) The second lithium composite oxide is mixed with water at room temperature for 30 minutes to be water-cleaned.
(7) The water-cleaned second lithium composite oxide is dried in a dryer at a temperature of 300 °C.
(8) A third mixture comprising the dried second lithium composite oxide and H₃BO₃ is obtained. The H₃BO₃ content of the third mixture is 0.35 mol with respect to 100 mol of the second lithium composite oxide.
(9) The third mixture is heat-treated under an oxygen atmosphere at a temperature of 250 °C for 12 hours. A positive electrode active material is obtained.

### Examples 2 to 4 and Comparative Examples 1 to 3

The same procedure as in Example 1 was repeated except that the H₃BO₃ content of the third mixture in (8) and the heat-treating temperature in (9) was changed according to following Table 1.

### [Evaluation Method]

### 1. XRD Analysis

XRD analysis was performed on 5 g of a positive electrode active material sample of Examples and Comparative Examples. Iabc and c-axis length were measured by XRD analysis. D8 ENDEAVOR from Bruker was used as an XRD analysis equipment. The analysis angle range was 10 degrees to 120 degrees, and the analysis conditions were 11 degrees/minute. Iabc and c-axis lengths were calculated by Rietveld refining. The measurements were performed for three times per sample. The results were summarized as arithmetic average value.

### 2. Battery Capacity Characteristics

A positive electrode slurry was prepared in which 90 wt % of the positive electrode active material of the Examples and Comparative Examples, 4.5 wt % of carbon black, and 5.5 wt % of a PVDF binder were dispersed in n-methyl-2-pyrrolidone (NMP). The positive electrode slurry was uniformly coated to an aluminum thin film having a thickness of 15 µm, and was vacuum dried at 135 °C. A positive electrode for a lithium secondary battery was manufactured.

A half cell including the positive electrode was manufactured. The counter electrode of the half cell was a lithium foil. The separator of the half cell was a porous polyethylene membrane (Celgard 2300, thickness: 25 µm). The electrolyte solution of the half cell was prepared by dissolving LiPF₆ at a concentration of 1.15 M in a solvent in which ethylene carbonate (EC), dimethyl carbonate (DMC), and ethyl methyl carbonate (EMC) were mixed at a volume ratio of 2:4:4 (EC:DMC:EMC). The electrolyte solution was injected into a cell of a positive electrode-separator- counter electrode.

The initial charge capacity and initial discharge capacity of the half cell were measured using an electrochemical analyzer (Toyo, Toscat-3100). The measurement conditions were a temperature of 25° C., a voltage range of 2.0 V to 4.6 V, and a discharge rate of 0.1 C to 5.0 C.

### 3. Battery Lifetime Characteristics

50 times of charge/discharge under a 1.0 C charge/ 1.0 C discharge condition at 50 °C were performed on the half cell manufactured at the capacity characteristics evaluation. A ratio (%) of 50 times discharge capacity to the one time discharge capacity was calculated.

### [Results and Discussions]

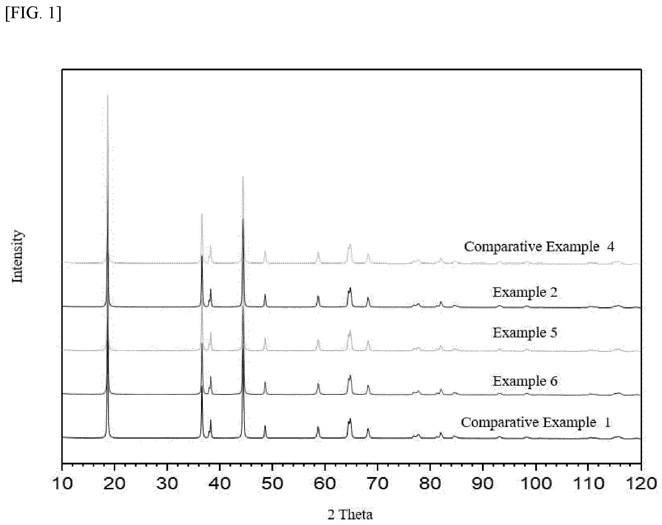

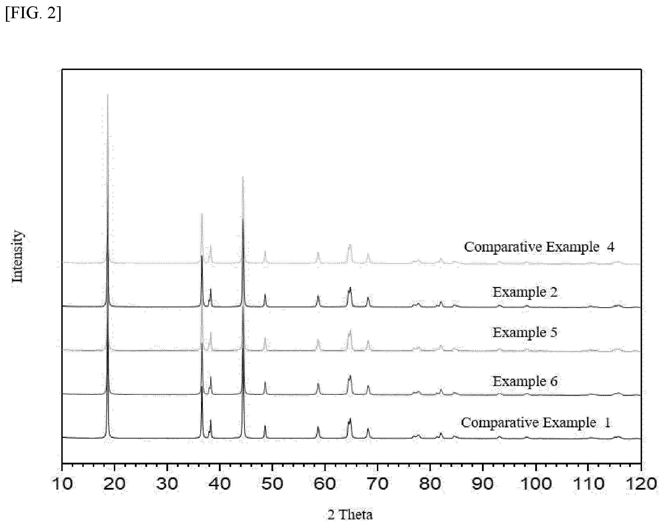

The manufacturing conditions, and evaluation results of characteristics, and performance evaluation of the positive electrode active materials of Example 1 to Example 4 and Comparative Example 1 to Comparative Example 3 are shown in Table 1. In addition, the XRD analysis results of Example 2, Example 5, Example 6, and Comparative Example 1 and Comparative Example 4 are shown in FIG. 1. The XRD analysis results of Example 1 to Example 4 and Comparative Example 2 to Comparative Example 3 are shown in FIG. 2.

**[Table 1]**

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| 3^{rd} Mixture H₃BO₃ Concentration (mol¹⁾) | 0.35 | 0.35 | 0.35 | 0.35 | 0.28 | 0.25 | 0.15 | 0.35 | 0.35 | 0.4 |
| 3^{rd} Mixture Heat-treating Temperature (°C) | 250 | 300 | 350 | 400 | 300 | 300 | 300 | 450 | 500 | 320 |
| R-Factor²⁾ | 0.452 | 0.453 | 0.454 | 0.467 | 0.454 | 0.452 | 0.445 | 0.468 | 0.47 | 0.456 |
| Ni Occu. ³⁾ | 0.81 | 0.85 | 0.92 | 1.17 | 0.85 | 0.81 | 0.499 | 1.31 | 1.55 | 0.87 |
| c-axis length (Å) | 14.1876 | 14.1877 | 14.1881 | 14.1880 | 14.1886 | 14.1890 | 14.1916 | 14.1895 | 14.1901 | 14.1900 |
| Initial Charging Capacity (mAh/g) | 234.7 | 234 | 232.7 | 232.5 | 234.8 | 235.6 | 235.2 | 232.2 | 229.5 | 234.7 |
| Initial Discharging Capacity (mAh/g) | 219 | 218.9 | 217.5 | 215.5 | 217.5 | 218.1 | 213.3 | 213 | 212 | 220.2 |
| Initial Charging/ Discharging Efficiency (%) | 93.20 | 93.60 | 93.40 | 92.90 | 92.7 | 92.6 | 90.70 | 91.70 | 91.10 | 93.8 |
| High Temperature Lifespan (%) | 88.80 | 86.90 | 86.90 | 86.40 | 85.2 | 85.4 | 82.40 | 87.00 | 86.10 | 79.2 |
| 1) With respect to 100 mol of the second lithium composite oxide | | | | | | | | | | |
| 2) (I102+I0006)/(I101) | | | | | | | | | | |
| 3) 1003/1104 | | | | | | | | | | |

Table 1 shows that the initial charging/discharging efficiency and the high-temperature lifespan of the Examples are improved compared to the Comparative Examples. Herein, the initial charging/discharging efficiency increased by a maximum of 3.2 %. The high-temperature lifespan increased by a maximum of 11.1 %. Through this, it is confirmed that a battery made of a positive electrode active material that satisfies all the characteristics of the present invention is capable of exhibiting improved initial charging/discharging efficiency (capacity) and lifespan (high-temperature lifespan) compared to a battery that is made of a positive electrode active material that does not satisfy the characteristics of the present invention.

## Claims

1. A positive electrode active material comprising:
a particle comprising a compound represented by the following Chemical Formula 1; and
an outer layer surrounding the particle;
wherein I003/I104 value of the positive electrode active material is in a range of 0.8 to 1.2,
wherein (I102 + I006)/(I101) value of the positive electrode active material is in a range of 0.448 to 0.467, and
wherein a c-axis length of the positive electrode active material is in a range of 14.1870 Å to 14.1893 Å:
[Chemical Formula 1] Liₐ(NiₓMn_{y}Co_{z}M1_{w})O₂
in Chemical Formula 1, 0.9 ≤ a ≤ 1.1, 0.8 ≤ x1.0, 0 ≤ y ≤ 0.5, 0≤z≤0.5, 0<w<0.005, and x+y+z+w=1, and M1 comprises at least one selected from the group consisting of Al, Ti, Zr, Mg, Zn, B, Mo, Fe, Co, Ni, Ba, and W.

2. The positive electrode active material of claim 1, wherein the outer layer comprises:
an M2 component distributed on a portion of a surface of the particle; and
an M3 component different from the M2 component and distributed on a remaining portion of the surface of the particle;
wherein the M2 component comprises at least three selected from the group consisting of Al, Ti, Zr, Mg, Zn, B, Mo, Fe, Co, Ni, Ba, and W, and
wherein the M3 component comprises at least one selected from the group consisting of Al, Ti, Zr, Mg, Zn, B, Mo, Fe, Co, Ni, Ba, and W.

3. The positive electrode active material of claim 2, wherein the M2 component content is greater than the M3 component content.

4. The positive electrode active material of claim 2, wherein the M2 component content is in a range of 0.9 mol% to 1.8 mol%.

5. The positive electrode active material of claim 2, wherein the M3 component content is in a range of 0.25 mol% to 0.35 mol%.

6. The positive electrode active material of claim 2, wherein the M1 component comprises Zr.

7. The positive electrode active material of claim 2, wherein the M2 component comprises Zr, Al, and Ti.

8. The positive electrode active material of claim 2, wherein the M3 component comprises B.

9. A secondary battery comprising:
a positive electrode, a negative electrode, and an electrolyte,
wherein the positive electrode comprises a positive electrode active material, and
wherein the positive electrode active material comprises:
a particle comprising a compound represented by the following Chemical Formula 1; and
an outer layer surrounding the particle;
wherein I003/I104 value of the positive electrode active material is in a range of 0.8 to 1.2,
wherein (I102 + I006)/(I101) value of the positive electrode active material is in a range of 0.448 to 0.467, and
wherein a c-axis length of the positive electrode active material is in a range of 14.1870 Å to 14.1893 Å:
[Chemical Formula 1] Liₐ(NiₓMn_{y}Co_{z}M1_{w})O₂
in Chemical Formula 1, 0.9 ≤ a ≤ 1.1, 0.8≤x1.0, 0 ≤ y ≤ 0.5, 0≤z≤0.5, 0<w<0.005, and x+y+z+w=1, and M1 comprises at least one selected from the group consisting of Al, Ti, Zr, Mg, Zn, B, Mo, Fe, Co, Ni, Ba, and W.

10. A method for manufacturing a positive electrode active material, the method comprising:
preparing a hydroxide of a transition metal comprising nickel, cobalt, and manganese;
sintering a first mixture comprising the transition metal hydroxide, a M1 component precursor, and a lithium compound to obtain a first lithium composite oxide;
sintering a second mixture comprising the first lithium composite oxide and a M2 component precursor to obtain a second lithium composite oxide;
water-cleaning the second lithium composite oxide;
drying the water-cleaned second lithium composite oxide; and
heat-treating a third mixture comprising the dried second lithium composite oxide and a M3 component precursor;
wherein the M1 component comprises at least one selected from the group consisting of Al, Ti, Zr, Mg, Zn, B, Mo, Fe, Co, Ni, Ba, and W,
wherein the M2 component comprises at least three selected from the group consisting of Al, Ti, Zr, Mg, Zn, B, Mo, Fe, Co, Ni, Ba, and W,
wherein the M3 component comprises at least one selected from the group consisting of Al, Ti, Zr, Mg, Zn, B, Mo, Fe, Co, Ni, Ba, and W,
wherein the M3 component is different from the M2 component,
wherein the M3 component precursor content of the third mixture is in a range of 0.25 mol to 0.35 mol with respect to 100 mol of the dried second lithium composite oxide, and
wherein the heat-treating of the third mixture is performed at a temperature in a range of 250 °C to 400 °C.

11. The method of claim 10, wherein the M1 component precursor content of the first mixture is less than 0.5 mol with respect to 100 mol of the transition metal hydroxide.

12. The method of claim 10, wherein the M2 component precursor content of the second mixture is in a range of 0.9 mol to 1.8 mol with respect to 100 mol of the first lithium composite oxide.

13. The method of claim 10, wherein the M1 component comprises Zr,
wherein the M2 component comprises Zr, Al, and Ti, and
wherein the M3 component comprises B.
